# EUROPEAN PATENT SPECIFICATION

(11) **EP 3 254 191 B1**
(45) Date of publication and mention of the grant of the patent: **02.09.2020**
(21) Application number: 16779537.6
(22) Date of filing: 31.03.2016
(51) Int. Cl.: G06F 9/455, G06F 8/41, G06F 16/2453

(54) **APPARATUS AND METHOD FOR USING PARAMETERIZED INTERMEDIATE REPRESENTATION FOR JUST-IN-TIME COMPILATION IN DATABASE QUERY EXECUTION ENGINE**
VORRICHTUNG UND VERFAHREN ZUR VERWENDUNG VON PARAMETRISIERTER ZWISCHENDARSTELLUNG ZUR JUST-IN-TIME-KOMPILIERUNG IN DATENBANKABFRAGEAUSFÜHRUNGSENGINE
APPAREIL ET PROCÉDÉ POUR UTILISER UNE REPRÉSENTATION INTERMÉDIAIRE PARAMÉTRÉE POUR UNE COMPILATION À LA VOLÉE DANS UN MOTEUR D'EXÉCUTION D'INTERROGATION DE BASE DE DONNÉES

(30) Priority: 15.04.2015 US 201514687473
(43) Date of publication of application: 13.12.2017
(73) Proprietor: Huawei Technologies Co. Ltd., Shenzhen, Guangdong 518129 (CN)
(72) Inventor: DING, Yonghua, San Jose, California 95124 (US); ZHANG, Guogen, San Jose, California 95120 (US); ZHU, Cheng, San Jose, California 95120 (US)
(74) Representative: Isarpatent
(86) International application number: PCT/CN2016/078078
(87) International publication number: WO 2016/165562

(56) References cited:
- US-A1- 2003 070 161
- US-A1- 2012 239 912
- US-A1- 2014 082 597
- US-B2- 7 383 255

## Description

### TECHNICAL FIELD

The present invention relates to database processing, and, in particular embodiments, to an apparatus and method for using parameterized intermediate representation for just-in-time compilation in a database query execution engine.

### BACKGROUND

Central Processing Unit (CPU) cost of query execution is getting more critical in modern database systems, such as when slow disk accesses are largely avoided with the adoption of solid-state drive (SSD) devices. Just-in-time (JIT) compilation is an approach used to improve the CPU performance in a database system. JIT compilation refers to a compilation scheme in query execution performed during execution of a program, at run-time, rather than prior to execution. The low level virtual machine (LLVM) compiler framework is a good candidate for JIT compilation due to its efficiency on code optimization and native code generation, and the quality of its compiled code. The LLVM includes a building function (referred to as IRBuilder) for generating, at run-time, an intermediate representation (IR) of a query-specific function. The LLVM can more efficiently generate optimized machine code from the IR than the compiled query-specific function, for instance. However, the code generation of LLVM IR by using the LLVM IRBuilder at run-time is costly, e.g., in terms of time and/or computing resources, such as memory, and is error-prone. Alternatively, a tool such as clang/clang++ provided by LLVM can be used for compiling C/C++ code into LLVM IR. This approach by itself may not have benefits from the JIT compilation if the C/C++ code is not specialized for the incoming query. Thus, there is a need for a scheme of generating IR for JIT compilation of query with improved efficiency. In the prior art, US 2003/070161 A1 relates to a platform-independent selective ahead-of-time compilation apparatus and method which enable even before run-time to generate an intermediate and platform-independent IR code. At run-time, the IR code is identified and combined with class files (class code). The class files are compiled Java programs which contain byte codes executable by a virtual machine, such as a Java virtual machine.
The object of the present invention is to provide a method and an apparatus for a database query execution engine which can optimise the generation of IRs for JIT compilation of queries with improved efficiency. This object is solved by a method according to claim 1 and by an apparatus according to claim 7. Further advantageous embodiments and improvements of the invention are listed in the dependent claims. Hereinafter, before coming to a detailed discussion of the embodiments of the invention with reference to the attached drawings, some general aspects of the invention are highlighted which contribute to the understanding of the invention as defined in the independent claims 1 and 7.

### SUMMARY OF THE INVENTION

In accordance with an aspect, a method supporting query just-in-time (JIT) compilation and execution in a database management system includes identifying a central processing unit (CPU) intensive function in a query, and identifying, in the CPU intensive function, one or more parameters. The one or more parameters represent variables with values changeable at different query instances. The CPU intensive function is compiled to a parameterized intermediate representation (IR) including the one or more parameters. The parameterized IR of the CPU intensive function is saved in a catalog of parameterized IRs.

In accordance with another aspect, a method supporting query JIT compilation and execution in a database management system includes compiling a CPU intensive function to a parameterized IR including one or more parameters. The one or more parameters represent variables with values at different changeable query instances. The method further includes saving the parameterized IR of the CPU intensive function in a catalog of parameterized IRs, and loading, during preparation for execution of an incoming query, a parameterized IR from a catalog. In the parameterized IR, the one or more parameters are replaced with constant values for the variables of the incoming query. The parameterized IR are compiled, using the JIT compilation, with the constant values replacing the one or more parameters, to generate a machine code for the execution of the incoming query.

In accordance with yet another aspect, an apparatus for a database query execution engine comprises at least one processor and a non-transitory computer readable storage medium storing programming for execution by the at least one processor. The programming includes instructions to identify a CPU intensive function in a query, and identify, in the CPU intensive function, one or more parameters that represent variables with values changeable at different query instances. The programming includes further instructions to compile the CPU intensive function to a parameterized IR including the one or more parameters, and save the parameterized IR of the CPU intensive function in a catalog of parameterized IRs.

The foregoing has outlined rather broadly the features of aspects of the present invention in order that the detailed description of the invention that follows may be better understood. Additional features and advantages of embodiments of the invention will be described hereinafter, which form the subject of the claims of the invention. It should be appreciated by those skilled in the art that the conception and specific embodiments disclosed may be readily utilized as a basis for modifying or designing other structures or processes for carrying out the same purposes of the present invention.

### BRIEF DESCRIPTION OF THE DRAWINGS

For a more complete understanding of the present invention, and the advantages thereof, reference is now made to the following descriptions taken in conjunction with the accompanying drawing, in which:
Figure 1 shows a framework for query processing in a database management system;
Figure 2 shows an embodiment method for generating a parameterized IR for query functions;
Figure 3 shows an embodiment method for JIT compiling a parameterized IR for a query function; and
Figure 4 is a diagram of a processing system that can be used to implement various embodiments.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

System and method embodiments are provided herein for using parameterized Intermediate Representation (IR) for just-in-time (JIT) compilation in database query execution engines. Specifically, for a given query function such as a processor (or CPU) intensive function handled by the database execution engine, the variables of the function which could be invariants (fixed) for a specific query are identified. The variables have changeable values at different query instances, and thus can be used as parameters for the query. The CPU intensive functions can be functions that demand more processing resources, such as in terms of time, memory or other processing resources. The CPU intensive function can be identified by CPU profiling. The identified variables can include, for example, schema information and expression or data type related variables. The variables identified as invariants can provide more compiler optimizations such as dead code elimination, loop unrolling, constant folding and propagation, inline of the virtual function call, or the call via a function pointer. The identified variables are set in a template IR of the CPU intensive function as parameters of the IR. During the JIT compilation, e.g., by an IR compiler such as LLVM JIT compiler, the parameters in the IR are replaced by constant values of the query specific information to generate the optimized machine code for execution.

The template IR with the parameters, referred to herein as the parameterized IR, is statically compiled from the original function (interpreted code), and the IR can be stored in a catalog table with a unique ID and the parameter names. The parameterized IR is loaded, at run-time, during the preparation for the execution of a specific query, and the parameters in the IR are hence replaced with the constant values to obtain a modified IR. The modified IR is then JIT compiled to generate native machine code for the function. Generating and compiling a parameterized IR as such, with a block of instructions in the query function simultaneously or at one time, can avoid the costly and error-prone instruction-by-instruction generation of the query specific IR function at run-time. By saving a generic version of the parameterized IR function, loading the IR at run-time, and JIT compiling the IR function after injecting the query specific information to the parameterized IR, there is no need to generate C/C++ code at run-time for each JIT compilation. Generating and compiling the parameterized IR scheme is also faster than generating C/C++ code for the query and using a C/C++ compiler to JIT compile the query.

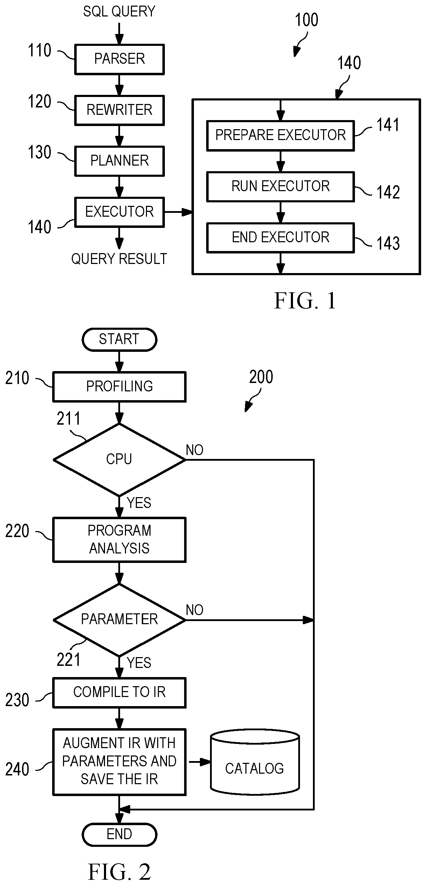

Figure 1 shows an example of a framework 100 of query processing in a database management system. A SQL query is first parsed by a parser function 110 and then rewritten accordingly, by a rewriter function 120, in a form suitable for execution. The rewritten query can be analyzed by a planner function 130 to determine its execution parameters or settings, and generate the query plan. An executor function 140, also referred to herein as a query execution engine, performs the execution of the rewritten query plan. The executor function 140 includes three steps: prepare executor step 141 to allocate run-time data structures and prepare for the query execution, run executor step 142 to execute the query in the iterator style, and end executor step 143 to free run-time data structures and end the query execution. The functions above can be implemented using software that runs on a CPU or suitable processor.

In an embodiment, the executor 140 (the database query execution engine) implements JIT compilation using parameterized IR. Figure 2 shows a flowchart of a method 200 for generating a parameterized IR for query functions. The method includes identifying and preparing an IR template with parameters (parameterized IR) before the start of the query execution engine. Using CPU profiling (step 210), the CPU intensive functions that may benefit from the JIT compilation in the database query execution engine are identified (step 211). CPU profiling includes tracking the CPU performance in previous runs of the query with the function to determine its CPU percentage usage over time, for instance, and/or other CPU resources or performance indicators, and comparing the tracked CPU performance of the function to CPU performance of other functions or a predetermined threshold. Accordingly, the functions that requires above average CPU percentage usage or resources can be classified as a CPU intensive function. After running the program analysis with the database schema information on each of these CPU intensive functions (step 220), the parameters for the variables in the functions are then identified (step 221). The value of each parameter is invariant for a specific incoming query and the replacement of the parameter with the constant value in the IR is expected to benefit the JIT compilation. The functions are then statically compiled to the IR (step 230), and the parameter information is augmented to the compiled IR to obtain the parameterized IRs, which are saved in a catalog table (step 240). The table also includes a unique identifier (ID) for each parameterized IR, as shown in the exemplary Table 1 below.

**Table 1: Catalog IR table for saving parameterized IRs.**

| ID (integer ) | Name (varchar) | IR (varbinar y) | Farm_nu m (int) | P1 (Varcha r) | P2 (Varcha r) | P3 (Varchar) |
|---|---|---|---|---|---|---|
| 1 | Sdt_loop | ... | 1 | NATTS | | |
| 2 | Comparetup_index_btree _IR | ... | 3 | NKEYS | ISNUL L | KEYTYP E |
| ... | ... | ... | ... | ... | ... | ... |

The unique ID can have an enumerated data type for matching its IR in the table, and is used for retrieving the IR later in the query execution engine (during execution run-time). The enumerated data type can be defined as follows:

```
          enum IRFunctionsID{
             SDT LOOP IR = 1,
             COMPARETUP_INDEX_BTREE_IR = 2,
             ...
          }.
```

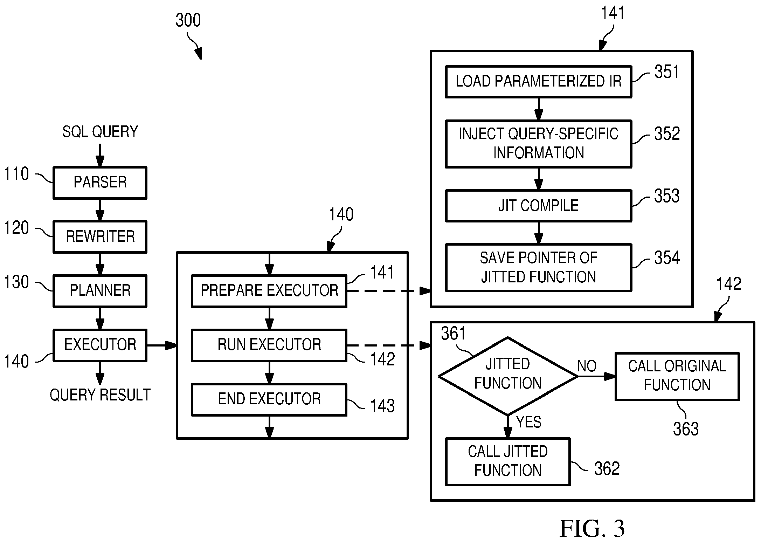

Figure 3 illustrates the query processing with JIT compilation method 300 using the parameterized IR. With the parameterized IR prepared before the query execution, the database query execution engine (executor 140) can load, during the prepare executor step 141, the parameterized IR on demand from the catalog table of parameterized IRs based on the unique ID (step 351), and inject the query-specific information into the parameterized IR (step 352). The execution engine can then JIT compile the modified IR to generate the optimized machine code (step 353) and save the pointer of the JIT compiled function in the run-time data structure (354). At the execution of the query during the run executor step 142, the execution engine checks if the JIT compiled function exists (step 361) to decide whether to call of this JIT compiled function (step 362) or alternatively of the original interpreted function (step 363).

The code (in C language) below illustrates an example of a function sdt_loop extracted from PostgreSQL:

```
 sdt_loop (int natts, datum *values)
 {
      int i;
      for (i=0; i < natts; i++) {
             values[i] = ...
 }
             }.
```

In the example, the function sdt_loop is simplified and extracted from the query execution engine of PostgreSQL. The function sdt_loop is used to extract column values from an in-memory tuple. The value of the variable *natts* is invariant for a specific relation in a query and it is the number of column values that need to be extracted from a tuple. Based on the CPU profiling and program analysis, the function sdt_loop is identified as a candidate for JIT compilation in the database query execution engine. The variable *natts* in the function is also identified as parameter in the compiled IR since for a specific relation in a query, the value of *natts* is not changed during the execution of the query. The function is statically compiled into IR with the augmented parameter of *natts* as follows:

```
 define void @sdt_loop(i32 %natts, i64* %values) {
 entry:
 %cmp4 = icmp sgt i32 %natts, 0
 br il %cmp4, label %for.body, label %for.end
 for.body:
 %indvars.iv = phi i64 [%indvars.iv.next, %for.body], [0, %entry]
 %arrayidx = getelementptr inbounds i64* %values, i64 %indvars.iv
 %rhs_val = ... ; compute the value
 store i64 %rhs_val, i64* %arrayidx, align 8
 %indvars.iv.next = add i64 %indvars.iv, 1
 %lftr.wideiv = trunc i64 %indvars.iv.next to i32
 %exitcond = icmp eq i32 %lftr.wideiv, %natts
 br il %exitcond, label %for.end, label %for.body
 for.end:
 ret void
 }.
```

The parameterized IR above is saved in the catalog table to be loaded for JIT compilation in the query execution engine of PostgreSQL. In a scenario, a query is received with *natts* equal to 3 as follows:

```
 sdt_loop (int natts, datum *values)
 {
      int i;
      for (i=0; i < 3; i++) {
             values[i] = ...
      }
 };
             SELECT COUNT(*) FROM T WHERE C3 > 0;
```

In the above example, C3 is the third column in the table T.

The parameterized IR is hence loaded from the catalog table and the reference of the parameter *natts* is replaced with the constant 3 in the IR as follows:

```
 define void @sdt_loop(i32 %natts, i64* %values) {
 entry:
 %cmp4 = icmp sgt i32 3, 0
 br il %cmp4, label %for.body, label %for.end
 for.body:
 %indvars.iv = phi i64 [%indvars.iv.next, %for.body], [0, %entry]
 %arrayidx = getelementptr inbounds i64* %values, i64 %indvars.iv
 %rhs_val = ... ; compute the value
 store i64 %rhs_val, i64* %arrayidx, align 8
 %indvars.iv.next = add i64 %indvars.iv, 1
 %lftr.wideiv = trunc i64 %indvars.iv.next to i32
 %exitcond = icmp eq i32 %lftr.wideiv, 3
 br il %exitcond, label %for.end, label %for.body
 for.end:
 ret void
 }.
```

The above LLVM IR is equivalent to the following C code:

```
 sdt_loop (int natts, datum *values)
 {
  int i;
  for (i=0; i < 3; i++) {
    values[i] = ...
  }
 }.
```

The function is then JIT compiled and the native machine code is generated for the execution of this query. The resulting optimized code with JIT compilation on the function sdt_loop becomes:

```
 define void @sdt_loop(i32 %natts, i64* %values) {
 entry:
 %rhs_val.0 = ... ; compute the first value
 store i64 %rhs_val.0, i64* %values, align 8
 %arrayidx.1 = getelementptr inbounds i64* %values, i64 1
 %rhs_val.1 = ... ; compute the second value
 store i64 %rhs_val.1, i64* %arrayidx.1, align 8
 %arrayidx.2 = getelementptr inbounds i64* %values, i64 2
 %rhs_val.2 = ... ; compute the third value
 store i64 %rhs_val.2, i64* %arrayidx.2, align 8
 ret void
 }.
 The equivalent C code is:
 sdt_loop (int natts, datum *values)
 {
      values[0] = ...
      values[1] = ...
      values[2] = ...
      }.
```

Without loss of generality, the method above can be applied to other CPU intensive functions in the database query execution engine, such as hash join, sort or aggregation with group-by, index creation, or others. In the method, a program analysis can be applied to identify parameters in a candidate function for JIT compilation. If the value of a variable is invariant for a specific query (query specific information) and the replacement of the variable with a constant is expected to introduce more compiler optimizations on the function, such as dead code elimination, loop unrolling, constant folding and propagation, inline the virtual function call, or the call via a function pointer, then this variable is a parameter in the IR of the function for JIT compilation. Query specific information can be identified from the schema information of relations (e.g., tables, views, indexes) in the query, or from the expressions and data types in the query. For example, in the above sdt_loop function, the value of the variable *natts* can be determined for a specific query before its execution based on the schema information and the accessed columns in the query. For example, some schema information, for example, NOT NULL, can help on the dead code elimination (the NULL value check of a NOT NULL column is redundant for a query). The data type information (from the schema or from the query itself) can help resolve the function for a function pointer or a virtual function.

In embodiments, any one of two methods can be implemented to inject query specific information (constant values) to the parameterized IR. As the above example for the sdt_loop function shows, the first method comprises replacing the references of each parameter with its related constant value for the specific query. When the IR is loaded from the catalog table, the number of parameters and their names in the IR can also be obtained. The IR is parsed to replace the reference of a parameter in any instruction by the related constant value. The second method comprises inserting an assignment statement for each parameter in the beginning of the function as follows for the sdt_loop function example:

```
 sdt_loop (int natts, datum *values)
 {
      int i;
      natts = 3;
      for (i=0; i < natts; i++) {
             values[i] = ...
      }
 }.
```

The JIT compiler then propagates the constant value to the references of the parameter. The LLVM IR is in static single assignment form (SSA form), and there is no assignment instruction in LLVM IR. As such, the add instruction can be used to add the constant by zero as the assignment of the constant to the parameter variable. The resulting code becomes:

```
define void @sdt_loop(i32 %nattsl, i64* %values) {
 entry:
 %natts = add i32 0, 3 ;assign the value 3 to natts
 %cmp4 = icmp sgt i32 %natts, 0
 br il %cmp4, label %for.body, label %for.end
 for.body:
 %indvars.iv = phi i64 [%indvars.iv.next, %for.body], [0, %entry]
 %arrayidx = getelementptr inbounds i64* %values, i64 %indvars.iv
 %rhs_val = ... ; compute the value
 store i64 %rhs_val, i64* %arrayidx, align 8
 %indvars.iv.next = add i64 %indvars.iv, 1
 %lftr.wideiv = trunc i64 %indvars.iv.next to i32
 %exitcond = icmp eq i32 %lftr.wideiv, %natts
 br il %exitcond, label %for.end, label %for.body
 for.end:
 ret void
 }.
```

The JIT compilation can be applied to a function to generate the optimized machine code and return the function pointer of the JIT compiled function. In a scenario, the CPU intensive function may contain only a relatively small portion of code (e.g., a relatively small loop with multiple iterations) that is CPU intensive and has query-specific information. However, other code in the same function may be either not CPU intensive or may have no query-specific information. In such case, to reduce the cost of JIT compilation, the CPU intensive and query-specific portion of code can be split from the original function and a new function for that portion is thus constructed. The newly constructed and relatively small function is then JIT compiled instead of the original larger function.

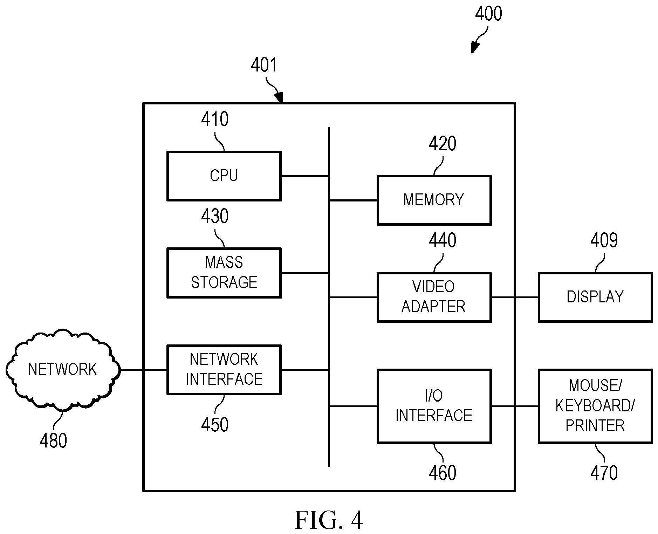

Figure 4 is a block diagram of a processing system 400 that can be used to implement various embodiments including the methods above. The processing system 400 can be part of the database management system or the database query execution engine. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system 400 may comprise a processing unit 401 equipped with one or more input/output devices, such as a speaker, microphone, mouse, touchscreen, keypad, keyboard, printer, display, and the like. The processing unit 401 may include a central processing unit (CPU) 410, a memory 420, a mass storage device 430, a video adapter 440, and an I/O interface 460 connected to a bus. The bus may be one or more of any type of several bus architectures including a memory bus or memory controller, a peripheral bus, a video bus, or the like.

The CPU 410 may comprise any type of electronic data processor. The memory 420 may comprise any type of system memory such as static random access memory (SRAM), dynamic random access memory (DRAM), synchronous DRAM (SDRAM), read-only memory (ROM), a combination thereof, or the like. In an embodiment, the memory 420 may include ROM for use at boot-up, and DRAM for program and data storage for use while executing programs. In embodiments, the memory 420 is non-transitory. The mass storage device 430 may comprise any type of storage device configured to store data, programs, and other information and to make the data, programs, and other information accessible via the bus. The mass storage device 430 may comprise, for example, one or more of a solid state drive, hard disk drive, a magnetic disk drive, an optical disk drive, or the like.

The video adapter 440 and the I/O interface 460 provide interfaces to couple external input and output devices to the processing unit. As illustrated, examples of input and output devices include a display 490 coupled to the video adapter 440 and any combination of mouse/keyboard/printer 470 coupled to the I/O interface 460. Other devices may be coupled to the processing unit 401, and additional or fewer interface cards may be utilized. For example, a serial interface card (not shown) may be used to provide a serial interface for a printer.

The processing unit 401 also includes one or more network interfaces 450, which may comprise wired links, such as an Ethernet cable or the like, and/or wireless links to access nodes or one or more networks 480. The network interface 450 allows the processing unit 401 to communicate with remote units via the networks 480. For example, the network interface 450 may provide wireless communication via one or more transmitters/transmit antennas and one or more receivers/receive antennas. In an embodiment, the processing unit 401 is coupled to a local-area network or a wide-area network for data processing and communications with remote devices, such as other processing units, the Internet, remote storage facilities, or the like.

In an example embodiment, a database management system includes a CPU identification module identifying a central processing unit (CPU) intensive function in a query, a parameter identification module identifying, in the CPU intensive function, one or more parameters, wherein the one or more parameters represent variables with values changeable at different query instances, a compile module compiling the CPU intensive function to a parameterized intermediate representation (IR) including the one or more parameters, and a save module saving the parameterized IR of the CPU intensive function in a catalog of parameterized IRs. In some embodiments, the database management system may include other or additional modules for performing any one of or combination of steps described in the embodiments.

In an example embodiment, a database management system includes a CPU compile module compiling a central processing unit (CPU) intensive function to a parameterized intermediate representation (IR) including one or more parameters, wherein the one or more parameters represent variables with values at different changeable query instances, a save module saving the parameterized IR of the CPU intensive function in a catalog of parameterized IRs, a load module loading, during preparation for execution of an incoming query, a parameterized IR from a catalog, a replace module replacing, in the parameterized IR, the one or more parameters with constant values for the variables of the incoming query, and a parameterized IR compile module compiling, using the JIT compilation, the parameterized IR with the constant values replacing the one or more parameters, to generate a machine code for the execution of the incoming query. In some embodiments, the database management system may include other or additional modules for performing any one of or combination of steps described in the embodiments.

While several embodiments have been provided in the present disclosure, it should be understood that the disclosed systems and methods might be embodied in many other specific forms. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods. Other items shown or discussed as coupled or directly coupled or communicating with each other may be indirectly coupled or communicating through some interface, device, or intermediate component whether electrically, mechanically, or otherwise.

## Claims

1. A method (200, 300) supporting query just-in-time, JIT, compilation and execution in a database management system, the method comprising:
a) identifying (211) a central processing unit ,CPU, intensive function in a query;
b) identifying (221), in the CPU intensive function, one or more variables of the function which are invariant for a specific query, the variables used as parameters for the query and having values changeable at different query instances;
c1) statically compiling (230) the CPU intensive function to a parameterized intermediate representation, IR, including the identified variables set as the one or more parameters;
c2) wherein the CPU intensive function is compiled to the parameterized IR prior to executing an incoming query at run-time with the values for the variables;
d) saving (240) the parameterized IR with the parameters of the CPU intensive function in a catalog of parameterized IRs; and comprising:
e1) loading (351), at run-time, during preparation for execution of an incoming query, the parameterized IR from the catalog;
e2) replacing (352), in the parameterized IR, the one or more parameters with constant values for the variables of an incoming query to obtain a modified IR; and
e3) JIT compiling (353), using the JIT compilation, the modified parameterized IR with the constant values replacing the one or more parameters, to generate a machine code for the execution of the incoming query.

2. The method of claim 1, further comprising saving, in the catalog, a unique identifier ID for the parameterized IR, wherein the parameterized IR is loaded from the catalog using the unique ID.

3. The method of claim 1, further comprising saving (354) a pointer of the compiled parameterized IR in a run-time data structure used for executing the incoming query using the machine code.

4. The method of any of claims 1 to 3, wherein identifying (211) the CPU intensive function includes performing CPU profiling by tracking CPU performance in previous runs of the query and comparing the tracked CPU performance of the CPU intensive function to CPU performance of other functions or a threshold.

5. The method of any of claims 1 to 4, wherein identifying (221), in the CPU intensive function, the one or more parameters includes performing program analysis using database schema information, expressions, or data types related to the CPU intensive function in the query to determine whether the variables are invariant.

6. The method of any of claims 1 to 5, wherein identifying, in the CPU intensive function, the one or more parameters includes selecting the variables expected to provide more compiler optimizations including dead code elimination, loop unrolling, constant folding and propagation, inline of virtual function call, or calling via a function pointer.

7. An apparatus (400) for a database query execution engine (140) comprising:
i) at least one processor (410); and
ii) a non-transitory computer readable storage medium (420) storing programming for execution by the at least one processor, the programming including instructions to:
a) identifying (211) a central processing unit, CPU, intensive function in a query;
b) identifying (221), in the CPU intensive function, one or more variables of the function which are invariant for a specific query, the variables used as parameters for the query and having values changeable at different query instances in the CPU intensive function;
c1) statically compiling (230) the CPU intensive function to a parameterized intermediate representation, IR, including the identified variables set as the one or more parameters; and
c2) wherein the CPU intensive function is compiled to the parameterized IR prior to executing an incoming query at run-time with the values for the variables;
d) saving (240) the parameterized IR with the parameters of the CPU intensive function in a catalog of parameterized IRs; and comprising
e1) loading (351), at run-time, during preparation for execution of an incoming query, the parameterized IR from the catalog;
e2) replacing (352), in the parameterized IR, the one or more parameters with constant values for the variables of an incoming query to obtain a modified IR; and
e3) JIT compiling (353), using the JIT compilation, the modified parameterized IR with the constant values replacing the one or more parameters, to generate a machine code for the execution of the incoming query.

8. The apparatus of claim 7, wherein the programming includes further instructions to save, in the catalog, a unique identifier ID for the parameterized IR, wherein the programming includes further instructions to load the parameterized IR from the catalog using the unique ID.

9. The apparatus of claim 7, wherein the programming includes further instructions to save a pointer of the compiled parameterized IR in a run-time data structure used for executing the incoming query using the machine code.

10. The apparatus of any of claims 7 to 9, wherein the instructions to identify the CPU intensive function includes instructions to perform CPU profiling by tracking CPU performance in previous runs of the query and compare the tracked CPU performance of the CPU intensive function to CPU performance of other functions or a threshold.

11. The apparatus of any of claims 7 to 10, wherein the instructions to identify, in the CPU intensive function, the one or more parameters includes instructions to perform program analysis using database schema information, expressions, or data types related to the CPU intensive function in the query to determine whether the variables are invariant.

## Patentansprüche

1. Verfahren (200, 300) zum Unterstützen von Just-in-Time(JIT-)Abfragekompilierung und -ausführung in einem Datenbankverwaltungssystem, das Verfahren Folgendes umfassend:
a) Identifizieren (211) einer für die zentrale Verarbeitungseinheit (CPU) intensiven Funktion in einer Abfrage;
b) Identifizieren (221), in der CPU-intensiven Funktion, einer oder mehrerer Variablen der Funktion, die für eine bestimmte Abfrage invariant sind, der Variablen, die als Parameter für die Abfrage verwendet werden und die Werte aufweisen, die an verschiedenen Abfrageinstanzen geändert werden können;
c1) statisches Kompilieren (230) der CPU-intensiven Funktion zu einer parametrisierten Zwischendarstellung (IR) einschließlich der identifizierten Variablen, die als ein oder mehrere Parameter eingestellt sind;
c2) wobei die CPU-intensive Funktion vor dem Ausführen einer eingehenden Abfrage zur Laufzeit mit den Werten für die Variablen zu der parametrisierten IR kompiliert wird;
d) Speichern (240) der parametrisierten IR mit den Parametern der CPU-intensiven Funktion in einem Katalog parametrisierter IR; und Folgendes umfassend:
e1) Laden (351), zur Laufzeit, der parametrisierten IR aus dem Katalog während der Vorbereitung zur Ausführung einer eingehenden Abfrage;
e2) Ersetzen (352) in der parametrisierten IR, des einen oder der mehreren Parameter durch konstante Werte für die Variablen einer eingehenden Abfrage, um eine modifizierte IR zu erhalten; und
e3) JIT-Kompilieren (353), unter Verwendung der JIT-Kompilierung, der modifizierten parametrisierten IR, wobei die konstanten Werte den einen oder die mehreren Parameter ersetzen, um einen Maschinencode zum Ausführen der eingehenden Abfrage zu generieren.

2. Verfahren nach Anspruch 1, ferner umfassend Speichern, in dem Katalog, einer eindeutigen Kennung für die parametrisierte IR, wobei die parametrisierte IR unter Einsatz der eindeutigen Kennung aus dem Katalog geladen wird.

3. Verfahren nach Anspruch 1, ferner umfassend Speichern (354) eines Zeigers der kompilierten parametrisierten IR unter Einsatz des Maschinencodes in einer für die Ausführung der eingehenden Abfrage eingesetzten Laufzeitdatenstruktur.

4. Verfahren nach einem der Ansprüche 1 bis 3, wobei das Identifizieren (211) der CPU-intensiven Funktion das Ausführen von CPU-Profilierung durch Überwachung von CPU-Leistung in früheren Durchläufen der Abfrage und das Vergleichen der überwachten CPU-Leistung der CPU-intensiven Funktion mit CPU-Leistung anderer Funktionen oder mit einem Schwellenwert beinhaltet.

5. Verfahren nach einem der Ansprüche 1 bis 4, wobei das Identifizieren (221) des einen oder der mehreren Parameter in der CPU-intensiven Funktion das Ausführen einer Programmanalyse unter Verwendung von Datenbank-Schemainformationen, Ausdrücken oder Datentypen in Verbindung mit der CPU-intensiven Funktion in der Abfrage enthält, um festzustellen, ob die Variablen invariant sind.

6. Verfahren nach einem der Ansprüche 1 bis 5, wobei das Identifizieren des einen oder der mehreren Parameter in der CPU-intensiven Funktion das Auswählen der Variablen enthält, von denen erwartet wird, dass sie mehr erwartete Compileroptimierungen bereitstellen, einschließlich Beseitigung von totem Code, Loop-Unrolling, Konstantenfaltung und Propagation, virtueller Inline-Funktionsaufruf oder Aufruf über einen Funktionszeiger.

7. Vorrichtung (400) für eine Datenbankabfrage-Ausführungsmaschine (140), Folgendes umfassend:
i) mindestens einen Prozessor (410); und
ii) ein nicht flüchtiges computerauslesbares Speichermedium (420), auf dem Programmierung zum Ausführen durch den mindestens einen Prozessor gespeichert ist, wobei die Programmierung Anweisungen beinhaltet zum:
a) Identifizieren (211) einer für die zentrale Verarbeitungseinheit (CPU) intensiven Funktion in einer Abfrage;
b) Identifizieren (221), in der CPU-intensiven Funktion, einer oder mehrerer Variablen der Funktion, die für eine bestimmte Abfrage invariant sind, der Variablen, die als Parameter für die Abfrage verwendet werden und die Werte aufweisen, die an verschiedenen Abfrageinstanzen in der CPU-intensiven Funktion geändert werden können;
c1) statisches Kompilieren (230) der CPU-intensiven Funktion zu einer parametrisierten Zwischendarstellung (IR) einschließlich der identifizierten Variablen, die als ein oder mehrere Parameter eingestellt sind; und
c2) wobei die CPU-intensive Funktion vor dem Ausführen einer eingehenden Abfrage zur Laufzeit mit den Werten für die Variablen zu der parametrisierten IR kompiliert wird;
d) Speichern (240) der parametrisierten IR mit den Parametern der CPU-intensiven Funktion in einem Katalog parametrisierter IR; und Folgendes umfassend:
e1) Laden (351), zur Laufzeit, der parametrisierten IR aus dem Katalog während der Vorbereitung zur Ausführung einer eingehenden Abfrage;
e2) Ersetzen (352) in der parametrisierten IR, des einen oder der mehreren Parameter durch konstante Werte für die Variablen einer eingehenden Abfrage, um eine modifizierte IR zu erhalten; und
e3) JIT-Kompilieren (353), unter Verwendung der JIT-Kompilierung, der modifizierten parametrisierten IR, wobei die konstanten Werte den einen oder die mehreren Parameter ersetzen, um einen Maschinencode zum Ausführen der eingehenden Abfrage zu generieren.

8. Vorrichtung nach Anspruch 7, wobei die Programmierung ferner Anweisungen enthält, eine eindeutige Kennung für die parametrisierten IR im Katalog zu speichern, wobei die Programmierung ferner Befehle enthält, die parametrisierte IR mithilfe der eindeutigen Kennung aus dem Katalog zu laden.

9. Vorrichtung nach Anspruch 7, wobei die Programmierung weitere Anweisungen enthält, unter Einsatz des Maschinencodes einen Zeiger der kompilierten parametrisierten IR in einer Laufzeitdatenstruktur zum Ausführen der eingehenden Abfrage zu speichern.

10. Vorrichtung nach einem der Ansprüche 7 bis 9, wobei die Anweisungen, die CPU-intensive Funktion zu identifizieren, Anweisungen enthält, eine CPU-Profilierung durch Überwachung von CPU-Leistung in früheren Durchläufen der Abfrage auszuführen und die überwachte CPU-Leistung der CPU-intensiven Funktion mit CPU-Leistung anderer Funktionen oder mit einem Schwellenwert zu vergleichen.

11. Vorrichtung nach einem der Ansprüche 7 bis 10, wobei die Anweisungen zum Identifizieren des einen oder der mehreren Parameter in der CPU-intensiven Funktion Anweisungen enthält, eine Programmanalyse unter Verwendung von Datenbank-Schemainformationen, Ausdrücken oder Datentypen in Verbindung mit der CPU-intensiven Funktion in der Abfrage durchzuführen, um festzustellen, ob die Variablen invariant sind.

## Revendications

1. Procédé (200, 300) prenant en charge une interrogation juste à temps, JIT, une compilation et une exécution dans un système de gestion de base de données, le procédé comprenant :
a) l'identification (211) d'une fonction intensive d'unité centrale de traitement CPU, dans une interrogation ;
b) l'identification (221), dans la fonction intensive de CPU, d'une ou plusieurs variables de la fonction qui sont invariantes pour une interrogation spécifique, les variables étant utilisées comme paramètres pour l'interrogation et ayant des valeurs modifiables à différentes instances d'interrogation ;
c1) la compilation statique (230) de la fonction intensive de CPU en une représentation intermédiaire, IR, paramétrée, comportant les variables identifiées définies comme le ou les paramètres ;
c2) dans lequel la fonction intensive de CPU est compilée en l'IR paramétrée avant l'exécution d'une interrogation entrante au moment de l'exécution pour les valeurs des variables ;
d) l'enregistrement (240) de l'IR paramétrée avec les paramètres de la fonction intensive de CPU dans un catalogue d'IR paramétrées ; et comprenant :
e1) le chargement (351), au moment de l'exécution, pendant la préparation pour l'exécution d'une interrogation entrante, de l'IR paramétrée à partir du catalogue ;
e2) le remplacement (352), dans l'IR paramétrée, du ou des paramètres par des valeurs constantes pour les variables d'une interrogation entrante pour obtenir une IR modifiée ; et
e3) la compilation JIT (353), à l'aide de la compilation JIT, de l'IR paramétrée modifiée avec les valeurs constantes remplaçant le ou les paramètres, pour générer un code machine pour l'exécution de l'interrogation entrante.

2. Procédé selon la revendication 1, comprenant en outre l'enregistrement, dans le catalogue, d'un identifiant unique ID pour l'IR paramétrée, dans lequel l'IR paramétrée est chargée à partir du catalogue à l'aide de l'ID unique.

3. Procédé selon la revendication 1, comprenant en outre l'enregistrement (354) d'un pointeur de l'IR paramétrée compilée dans une structure de données au moment de l'exécution utilisée pour exécuter l'interrogation entrante à l'aide du code machine.

4. Procédé selon l'une quelconque des revendications 1 à 3, dans lequel l'identification (211) de la fonction intensive de CPU comporte la mise en œuvre d'un profilage de CPU par suivi de la performance de CPU dans les exécutions précédentes de l'interrogation et en comparant la performance de CPU suivie de la fonction intensive de CPU à la performance de CPU d'autres fonctions ou d'un seuil.

5. Procédé selon l'une quelconque des revendications 1 à 4, dans lequel l'identification (221), dans la fonction intensive de CPU, du ou des paramètres comporte la mise en œuvre d'une analyse de programme à l'aide d'informations de schéma de base de données, d'expressions ou de types de données liés à la fonction intensive de CPU dans l'interrogation pour déterminer si les variables sont invariantes.

6. Procédé selon l'une quelconque des revendications 1 à 5, dans lequel l'identification, dans la fonction intensive de CPU, du ou des paramètres comporte la sélection des variables censées fournir plus d'optimisations de compilateur, comportant l'élimination du code mort, le déroulement de boucle, le pliage et la propagation constants, la ligne d'appel de fonction virtuelle, ou l'appel par l'intermédiaire d'un pointeur de fonction.

7. Appareil (400) pour un moteur d'exécution d'interrogation de base de données (140) comprenant :
i) au moins un processeur (410) ; et
ii) un support de stockage lisible par ordinateur non transitoire (420) stockant une programmation destinée à l'exécution par l'au moins un processeur, de la programmation comportant des instructions pour :
a) l'identification (211) d'une fonction intensive d'unité centrale de traitement CPU, dans une interrogation ;
b) l'identification (221), dans la fonction intensive de CPU, d'une ou plusieurs variables de la fonction qui sont invariantes pour une interrogation spécifique, les variables étant utilisées comme paramètres pour l'interrogation et ayant des valeurs modifiables à différentes instances d'interrogation dans la fonction intensive de CPU ;
c1) la compilation statique (230) de la fonction intensive de CPU en une représentation intermédiaire, IR, paramétrée, comportant les variables identifiées définies comme le ou les paramètres ; et
c2) dans lequel la fonction intensive de CPU est compilée en l'IR paramétrée avant l'exécution d'une interrogation entrante au moment de l'exécution pour les valeurs des variables ;
d) l'enregistrement (240) de l'IR paramétrée avec les paramètres de la fonction intensive de CPU dans un catalogue d'IR paramétrées ; et comprenant
e1) le chargement (351), au moment de l'exécution, pendant la préparation pour l'exécution d'une interrogation entrante, de l'IR paramétrée à partir du catalogue ;
e2) le remplacement (352), dans l'IR paramétrée, du ou des paramètres par des valeurs constantes pour les variables d'une interrogation entrante pour obtenir une IR modifiée ; et
e3) la compilation JIT (353), à l'aide de la compilation JIT, de l'IR paramétrée modifiée avec les valeurs constantes remplaçant le ou les paramètres, pour générer un code machine pour l'exécution de l'interrogation entrante.

8. Appareil selon la revendication 7, dans lequel la programmation comporte des instructions supplémentaires pour enregistrer, dans le catalogue, un identifiant unique, ID, pour l'IR paramétrée, dans lequel la programmation comporte des instructions supplémentaires pour charger l'IR paramétrée à partir du catalogue à l'aide de l'ID unique.

9. Appareil selon la revendication 7, dans lequel la programmation comporte des instructions supplémentaires pour enregistrer un pointeur de l'IR paramétrée compilée dans une structure de données au moment de l'exécution utilisée pour exécuter l'interrogation entrante à l'aide du code machine.

10. Appareil selon l'une quelconque des revendications 7 à 9, dans lequel les instructions pour identifier la fonction intensive de CPU comportent des instructions pour mettre en œuvre le profilage de CPU par suivi de la performance de CPU dans les exécutions précédentes de l'interrogation et comparer la performance de CPU suivie de la fonction intensive de CPU à la performance de CPU d'autres fonctions ou d'un seuil.

11. Appareil selon l'une quelconque des revendications 7 à 10, dans lequel les instructions pour identifier, dans la fonction intensive de CPU, le ou les paramètres comportent des instructions pour mettre en œuvre une analyse de programme à l'aide d'informations de schéma de base de données, d'expressions ou de types de données liées à la fonction intensive de CPU dans l'interrogation pour déterminer si les variables sont invariantes.
